# EUROPÄISCHE PATENTSCHRIFT

(11) **EP 0 728 555 B1**
(45) Veröffentlichungstag und Bekanntmachung des Hinweises auf die Patenterteilung: **31.03.1999**
(21) Anmeldenummer: 95119474.5
(22) Anmeldetag: 11.12.1995
(51) Int. Cl.: B23K 11/06

(54) **Verfahren zum Schweissen von Behältern**
Can welding method
Méthode de soudage de réservoirs

(30) Priorität: 24.02.1995 CH 538/95
(43) Veröffentlichungstag der Anmeldung: 28.08.1996
(73) Patentinhaber: ELPATRONIC AG, CH-6303 Zug (CH)
(72) Erfinder: Aderhold, Harry, CH-8965 Berikon (CH)

(56) Entgegenhaltungen:
- EP-A- 0 189 805
- US-A- 3 743 813
- US-A- 4 399 343

## Beschreibung

Die Erfindung betrifft ein Verfahren gemäss Oberbegriff des Patentanspruchs 1 sowie eine Schweissmaschine.

Beim Schweissen von Behältern, insbesonders Dreiteildosen, werden die zu schweissenden Zargen von einer Zuführeinrichtung einander folgend in den Einlauf der Schweissmaschine zugeführt. Die Schweissung erfolgt durch eine Widerstandsrollnahtschweissmaschine mit Drahtelektroden, welche Art von Maschinen bekannt ist und hier nicht näher erläutert werden muss. Bei jedem Anlauf der Schweissung nach einem Unterbruch der Schweisslinie, die in der Regel einen Abstapler für die Behälterbleche, einen Rundapparat zur Formung der Behälterzarge sowie die genannte Zuführeinrichtung und Schweissmaschine sowie entsprechende Fördermittel umfasst und daher mit einer gewissen Häufigkeit Betriebsunterbrüchen unterliegt, stellt sich das Problem, dass die erste Behälterzarge der anlaufenden Zargenreihe beim Einlauf in das Kalibrierwerkzeug der Schweissmaschine abgebremst wird, da dort Führungsschalen und/oder Kalibrierrollen angeordnet sind, die nicht angetrieben sind und daher von der ersten Dose beschleunigt werden müssen. Damit keine Kollision zwischen der ersten Behälterzarge und der nachfolgenden Behälterzarge aufgrund dieser Bremsung der ersten Zarge erfolgt, wird bekannterweise so vorgegangen, das die Zargen beim Einlauf in die Schweissmaschine konstant schneller gefördert und geschweisst werden, als deren Zufuhr erfolgt, so dass auch bei der Abbremsung der ersten Zarge sicher eine Kollision mit der zweiten Zarge vermieden wird. Als Resultat ergibt sich bei der Schweissung ein geringer Abstand zwischen der ersten und zweiten Zarge, der aber so gross ist, dass die Kollision vermieden wird, und ein grösserer Abstand zwischen der zweiten und dritten bzw. dritten und vierten Zarge usw., da diese Zargen beim Einlauf schneller eingezogen als zugeführt werden und auf bereits von der ersten Zarge beschleunigte, nichtangetriebene Rollen treffen und keine Abbremsung erfahren. Der Abstand der auf die erste Zarge folgenden Zargen voneinander beträgt damit z.B. ca. 0,8 bis 1 mm. Ein solcher Abstand zwischen aufeinanderfolgenden Zargen bringt aber bereits Probleme bei der Schweissqualität des jeweiligen Zargennahtanfanges mit sich. Ferner kann eine Ueberschweissung des Zargenendes auftreten sowie Schwingungen der Schweissrollen. Bei Behältern kann daraus eine ungenügende Festigkeit oder gar Undichtigkeit resultieren. Das Vorgehen gemäss Stand der Technik besteht also darin, dass mit einer hohen und konstanten Einzugs- und Schweissgeschwindigkeit gefahren wird, die die Zuführgeschwindigkeit deutlich übersteigt, um die Kollisionsprobleme sicher zu vermeiden, wodurch sich aber ein grosser Abstand bei der Schweissung ergibt, der zu Schweissqualitätsproblemen führen kann.

Der Erfindung liegt die Aufgabe zugrunde, ein verbessertes Verfahren zu schaffen, bei dem sowohl Kollisionsprobleme als auch Schweissqualitätsprobleme vermieden werden.

Diese Aufgabe wird bei dem eingangs genannten Verfahren mit den Merkmalen des Anspruchs 1 gelöst.

Dadurch, dass von dem bisher angewandten konstanten Betrieb der Schweissmaschine abgewichen wird, ergibt sich eine Lösung der geschilderten Probleme. Durch die erhöhte Geschwindigkeit der Schweissmaschine bzw. die erhöhte Drahtgeschwindigkeit zu Betriebsbeginn und nach jedem Betriebsunterbruch kann eine Kollision zwischen erster und zweiter Zarge sicher vermieden werden. Dadurch, dass nachfolgend auf eine tiefere Sollschweissgeschwindigkeit reduziert wird, können sehr kleine Abstände zwischen den Dosenzargen bewirkt werden. Mit anderen Worten, der Schweissdraht wird beschleunigt, bevor jeweils die erste Zarge geschweisst wird. Die erste Zarge wird dadurch schneller geschweisst als die nachfolgenden Zargen.

Vorzugsweise wird die Schweissgeschwindigkeit so herabgesetzt, dass sie im wesentlichen der Zuführgeschwindigkeit der Dosenzargen entspricht. Vorzugsweise werden die Abstände zwischen den Zargen so eingestellt, dass sie ca. 0,3 mm betragen.

Es stellt sich ferner die Aufgabe, eine Schweissmaschine zu schaffen, bei der die obengenannten Nachteile nicht auftreten. Diese Aufgabe wird durch die Merkmale des Anspruchs 5 gelöst.

Dadurch, dass die Schweissgeschwindigkeit der Maschine aufgrund eines Signals eines Zargendetektors reduzierbar ist, kann die Maschine bei Betriebsbeginn jeweils eine höhere Geschwindigkeit fahren, was das Kollisionsproblem zwischen der ersten und zweiten Zarge löst. Die nachfolgend durch den Zargendetektor bewirkte tiefere Sollgeschwindigkeit bewirkt dann den vorteilhaften, geringeren Zargenabstand.

Im folgenden wird die Erfindung anhand der Figuren näher erläutert. Dabei zeigt
Figur 1 schematisch den Geschwindigkeitsverlauf einer Schweissmaschine gemäss der Erfindung über der Zeit, und
Figur 2 schematisch den Einlaufbereich einer Schweissmaschine.

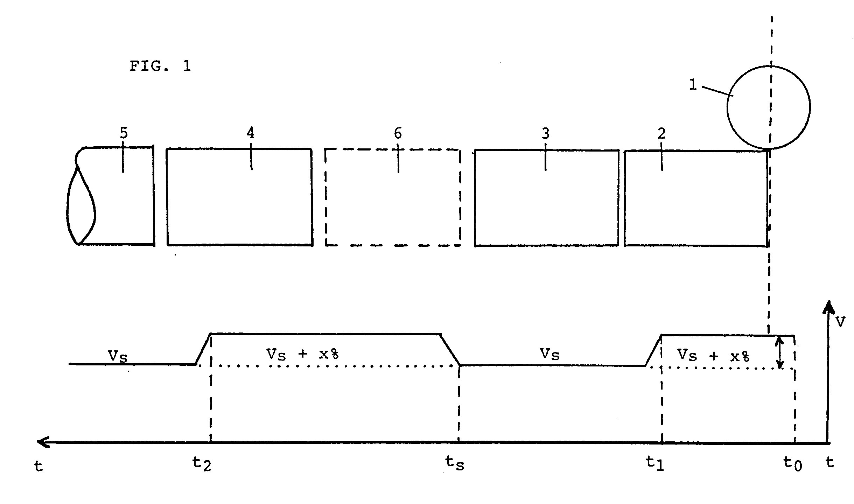

Die Figur 1 zeigt einerseits ein Diagramm der Schweissgeschwindigkeit über der Zeit, wobei auf der senkrechten Achse die Schweissgeschwindigkeit V der Schweissmaschine bzw. der Schweissrollen bei einer Rollnahtschweissmaschine angegeben ist. Mit dieser Geschwindigkeit laufen auch diejenigen Kalibrier- und/oder Führungsrollen, die angetrieben sind (sofern vorhanden), während die nicht angetriebenen Rollen anfänglich stillstehen und erst durch die eingeführten Zargen angetrieben werden. Die waagrechte Achse zeigt die Zeit t. Oberhalb des V/t-Diagramms ist schematisch die eine Schweissrolle 1 der Schweissmaschine sowie eine Reihe von Zargen 2,3,4, 5 dargestellt. Bei Betriebsbeginn tₒ ist eine Geschwindigkeit V_{S} + X% vorgesehen, welche höher liegt als die Sollschweissgeschwindigkeit V_{S}. Bei einer Schweissmaschine vom Typ MWM 6200 der Firma Soudronic AG, Bergdietikon, Schweiz kann die Sollgeschwindigkeit z.B. 130,6 m/min betragen, bei der Schweissung von Zargen mit 73 mm Durchmesser und 230 mm Länge, einer Blechdicke von 0,17 mm, einer Härte von DR 550 und einer Verzinnung von D 2.79/5.83 g/m², einer Schweisskraft von 500 N und einem Schweissstrom von 5500 A bei 1000 Hz sinus. Am Anfang der Zargenserie, d.h. bei Betriebsbeginn tₒ und beim Anlauf tₛ nach jedem Betriebsunterbruch, wird nun der Antrieb - mit der erhöhten Geschwindigkeit V_{S} + X% betrieben, wobei diese Geschwindigkeit 1-5 % höher liegt als die Sollschweissgeschwindigkeit, also z.B. 130,6 m/min + 2 % = 133,2 m/min. Diese erhöhte Geschwindigkeit besteht ab Betriebsbeginn und wird beim Einzug der ersten Zarge der Serie in die Maschine wirksam und sorgt dafür, dass diese Zarge, die durch die vorhandenen nichtangetriebenen und noch stillstehenden Kalibrier- und Führungsrollen abgebremst wird, mit einer höheren Geschwindigkeit eingezogen wird als dass die nachfolgende zweite Zarge der Serie, welche Serie von einem Zuführorgan für die zu verschweissenden Zargen angeliefert wird. Die mit der hohen Geschwindigkeit eingezogene erste Zarge ist daher aus dem Einzugsbereich entfernt, wenn die zweite Zarge in diesen Bereich gelangt. Sobald die erste Zarge im Kalibrierwerkzeug einen vorbestimmten Abstand zu den Schweissrollen erreicht hat, z.B. beim Zeitpunkt t₁, wird der Antrieb der Schweissmaschine auf die Sollgeschwindigkeit V_{S} heruntergefahren. Zur Detektion der ersten Zarge kann z.B. ein optischer, magnetischer oder induktiver Sensor verwendet werden. Solche Sensoren sind handelsüblich; es kann z.B. ein Näherungsschalter IFRW 12P1501/S14L der Firma Baumerelectric, Frauenfeld, Schweiz, verwendet werden. Die Einwirkung auf den Antrieb der Schweissmaschine kann mechanisch oder pneumatisch durch Verstellung eines Variators oder elektrisch durch entsprechende Steuerung des elektrischen Motors des Schweissmaschinenantriebs erfolgen.

Die Geschwindigkeit V_{S} wird nun eingehalten, bis ein Betriebsunterbruch 6 erfolgt ist, z.B. verursacht durch ein Doppelblech. Es wird dann wieder mit der Geschwindigkeit V_{S} + X% gefahren, um die nächste erste Zarge 4 zu schweissen. Für die folgende Zarge 5 wird die Geschwindigkeit erneut reduziert (t₂). Auf diese Sollgeschwindigkeit kann nun die Zuführgeschwindigkeit des Zuführorgans für die Dosenzargen so abgestimmt werden, dass sich ein kleiner Zargenabstand von z.B. 0,2 - 0,6 mm, vorzugsweise ca. 0,3 mm ergibt. Bei einem Zargenabstand von 0,3 mm wird in den letzten Schweisspunkt praktisch die gleiche Energie eingebracht wie in die Punkte auf der Naht und die ersten Punkte des Zargenanfanges sind nur geringfügig unterschweisst. Die Schwingungsanregung durch den Zwischenraum zwischen den Zargen wird ebenfalls stark reduziert, so dass die Schweissenergieeinbringung am Zargenanfang wesentlich konstanter wird.

Bei Zargenabständen von mehr als 0,8 mm hingegen ist der letzte Punkt deutlich um ca. 10 % überschweisst, während die ersten Punkte um bis zu 20 % unterschweisst sind. Durch mechanische Schwingungen variiert die Energie relativ stark.

Nach jedem Betriebsunterbruch wird erneut die Schweissgeschwindigkeit bei auf die höhere Geschwindigkeit hochgefahren, bis die jeweils erste Zarge in die Nähe der Schweissrollen gelangt. Danach erfolgt die Schweissung mit der Sollgeschwindigkeit. Die Sollgeschwindigkeit kann dabei im wesentlichen gleich der Zuführgeschwindigkeit sein, wenn die Zargen von dem Zuführorgan bereits in dem gewünschten Abstand zugeführt werden. Als Zuführorgan kommen dabei bekannterweise Förderketten oder Förderriemen mit Mitnehmern in betracht.

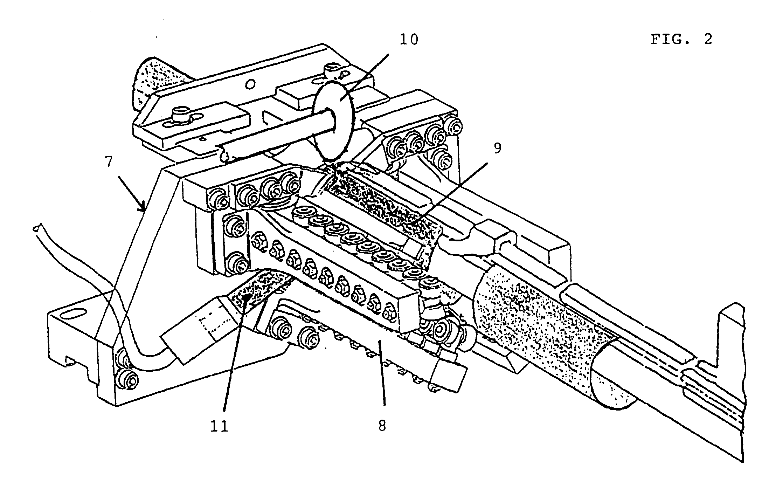

Figur 2 zeigt schematisch den Einlaufbereich einer Schweissmaschine 7 mit dem Kalibrierwerkzeug 8. Oberhalb der zu schweissenden Zarge 9 ist schematisch eine Schweissrolle 10 (ohne die Drahtelektrode) gezeigt. Der Näherungsschalter 11 ragt in das Kalibrierwerkzeug hinein und stellt das Vorhandensein einer Dosenzarge fest.

## Patentansprüche

1. Verfahren zum Betrieb einer Schweissmaschine (7) zum Schweissen der Längsnaht von Behälterzargen, insbesonders Dosenzargen, wobei die Zargen Führungs- und/oder Kalibrierrollen passieren und zu Schweissrollen (10) gelangen, dadurch gekennzeichnet, dass die Schweissmaschine bei einer Serie zu schweissender Zargen (2, 3) mit sich ändernder Schweissgeschwindigkeit betrieben wird, wobei die Schweissgeschwindigkeit beim Eintritt der ersten Zarge (2) der Serie in die Schweissmaschine erhöht ist und nachfolgend auf eine Sollschweissgeschwindigkeit reduziert wird.

2. Verfahren nach Anspruch 1, dadurch gekennzeichnet, dass die Reduktion beginnt, wenn die erste Zarge (2) sich innerhalb der Führungs- und/oder Kalibrierrollen befindet.

3. Verfahren nach Anspruch 1 oder 2, dadurch gekennzeichnet, dass der Abstand der zweiten Zarge zur dritten Zarge und dass die folgenden Abstände innerhalb der Serie jeweils 0,1 bis 0,6, vorzugsweise ca. 0,3 mm betragen.

4. Verfahren nach einem der Ansprüche 1 bis 3, wobei die Schweissmaschine Teil einer Schweisslinie mit Abstapler, Rundapparat und Zuführorgan vom Rundapparat zum Einlauf der Schweissmaschine ist, dadurch gekennzeichnet, dass die Sollschweissgeschwindigkeit im wesentlichen der Zuführgeschwindigkeit entspricht und die Zargen im vorgesehenen Abstand zugeführt werden.

5. Schweissmaschine, insbesonders Widerstandsrollnahtschweissmaschine mit Drahtelektroden, zum Schweissen einer Serie von Behälterzargen (2, 3), wobei die Schweissmaschine einen geschwindigkeitssteuerbaren Antrieb und einen Zargendetektor (11) aufweist, sowie Mittel zum Reduzieren der Schweissgeschwindigkeit beim Detektieren einer Zarge durch Reduzierung des Antriebs in seiner Geschwindigkeit.

6. Schweissmaschine nach Anspruch 5, dadurch gekennzeichnet, dass der Detektor (11) im Bereich der vor den Schweissrollen angeordneten Führungs- und/oder Kalibrierrollen vorgesehen ist.

7. Schweissmaschine nach Anspruch 5 oder 6, dadurch gekennzeichnet, dass der Detektor (11) auf einen mechanischen Variator für die Schweissgeschwindigkeit einwirkt.

8. Schweissmaschine nach Anspruch 5 oder 6, dadurch gekennzeichnet, dass der Detektor (11) auf einen elektronisch gesteuerten Servoantrieb einwirkt.

## Claims

1. Method for operating a welding machine (7) for welding the longitudinal seam of container bodies, in particular can bodies, in which the bodies pass through guide and/or calibrating rollers to welding rollers (10), characterized in that the welding machine is operated with a rate of feed which changes during the passage of a series of bodies (2, 3, 4) to be welded, the rate of feed being increased as the first body (2) of the series enters the welding machine and then reduced to a nominal rate.

2. Method according to Claim 1, characterized in that the reduction commences when the first body (2) is within the guide and/or calibrating rollers.

3. Method according to Claim 1 or Claim 2, characterized in that the gap between the second body and the third body and each of the subsequent gaps within the series are of 0.1 to 0.6, preferably 0.3, mm.

4. Method according to any one of Claims 1 to 3, in which the welding machine forms part of a welding line with destacker, rounding unit and a mechanism for transferring bodies from the rounding unit to the point of entry to the welding machine, characterized in that the nominal rate of feed for welding is essentially equal to the transfer rate and the bodies are fed at the prescribed interval.

5. Welding machine, in particular a roller seam resistance welding machine with wire electrodes, for welding a series of container bodies (2, 3), the welding machine having a variable speed drive and a [container] body detector (11), and also having means for reducing the rate of feed for welding by reducing the drive speed when the presence of a body is detected.

6. Welding machine according to Claim 5, characterized in that the detector (11) is provided in the region of the guide and/or calibrating rollers located ahead of the welding rollers.

7. Welding machine according to Claim 5 or Claim 6, characterized in that the detector (11) acts on a mechanical variable speed gear for the rate of feed for welding.

8. Welding machine according to Claim 5 or Claim 6, characterized in that the detector (11) acts on an electronically controlled servo drive.

## Revendications

1. Procédé de conduite d'une machine de soudage (7) destinée à souder le cordon de soudure longitudinal de corps de récipients, en particulier de corps de boîtes, les corps passant au droit de galets de guidage et/ou de calibrage et parvenant à des galets de soudage (10), caractérisé en ce que, pour une série de corps (2, 3, 4) à souder, on fait fonctionner la machine de soudage avec une vitesse de soudage variable, la vitesse de soudage étant augmentée lors de l'entrée du premier corps (2) de la série dans la machine de soudage puis étant réduite à une vitesse de soudage de consigne.

2. Procédé suivant la revendication 1, caractérisé en ce que la réduction commence lorsque le premier corps (2) se trouve à l'intérieur des galets de guidage et/ou de calibrage.

3. Procédé suivant la revendication 1 ou 2, caractérisé en ce que la distance du deuxième corps au troisième corps et les distances suivantes à l'intérieur de la série s'élèvent chacune à 0,1 à 0,6 mm, de préférence à environ 0,3 mm.

4. Procédé suivant l'une des revendications 1 à 3, dans lequel la machine de soudage constitue une partie d'une ligne de soudage comportant un appareil d'empilage, un appareil de cintrage et un organe d'introduction de l'appareil de cintrage à l'entrée de la machine de soudage, caractérisé en ce que la vitesse de soudage de consigne correspond essentiellement à la vitesse d'introduction et en ce que les corps sont introduits avec l'espacement prévu.

5. Machine de soudage, en particulier machine de soudage de cordons à galets et par résistance avec des électrodes en fil, destinée à souder une série de corps de récipients (2, 3), la machine de soudage comportant des moyens d'entraînement dont la vitesse peut être commandée, et un détecteur de corps, ainsi que des moyens pour réduire la vitesse de soudage, lors de la détection d'un corps, par réduction de la vitesse des moyens d'entraînement.

6. Machine de soudage suivant la revendication 5, caractérisée en ce que le détecteur (11) est prévu dans la région des galets de guidage et/ou de calibrage disposés devant les galets de soudage.

7. Machine de soudage suivant la revendication 5 ou 6, caractérisée en ce que le détecteur (11) agit sur un variateur mécanique pour la vitesse de soudage.

8. Machine de soudage suivant la revendication 5 ou 6, caractérisée en ce que le détecteur (11) agit sur une servocommande commandée électroniquement.
